# EUROPÄISCHE PATENTANMELDUNG

(11) **EP 4 782 356 A1**
(43) Veröffentlichungstag der Anmeldung: **29.07.2026**
(21) Anmeldenummer: 25223498.4
(22) Anmeldetag: 15.12.2025
(51) Int. Cl.: B65D 19/18, F16B 39/282

(54) **BEFESTIGUNGSELEMENT MIT ARRETIERELEMENT AM KOPFABSCHNITT UND PALETTENVORRICHTUNG**

(30) Priorität: 22.01.2025 DE 102025102292
(71) Anmelder: Craemer GmbH, 33442 Herzebrock-Clarholz (DE)
(72) Erfinder: Finke, Ralf-Peter, 33330 Gütersloh (DE); Eek, Jan, 2498 Den Haag (NL); Oudshoorn, Thijs, 3135 Vlaardingen (NL)
(74) Vertreter: Patentanwälte Olbricht Buchhold Keulertz

(57) **Zusammenfassung**

Die Erfindung betrifft ein Befestigungselement (80) für eine Palettenvorrichtung (2). Das Befestigungselement weist einen in eine Unterteilbefestigungsausnehmung (72) eines Unterteils (60) einzuführenden Einführabschnitt (88), der einen Grundkörper (90) und eine Rotationseingriffseinrichtung umfasst, die zumindest ein derartig radial vom Grundkörper (90) abstehendes Rotationseingriffselement (92) aufweist, dass es durch eine Rotation des Befestigungselementes (80) mit einem Oberteilrotationseingriffselement (48) eines Oberteils (20) in Eingriff zu bringen ist, einen entgegen einer Aufnahmerichtung (AR) an den Einführabschnitt (88) anschließenden Kopfabschnitt (84), der sich weiter radial von der Rotationsachse (RA) wegerstreckt als der Einführabschnitt (88) und eine dem Oberteil (20) zuzuwendende Kopfdruckfläche (106) ausbildet, die zum Anliegen an einer vom Oberteil (20) abgewandten und die Unterteilbefestigungsausnehmung (72) umgebenden Druckaufnahmefläche (110) des Unterteils (60) ausgebildet ist, und ein Arretierelement (108) zur Arretierung des Befestigungselementes (80) an dem Unterteil (60) auf. Erfindungsgemäß weist der Kopfabschnitt (84) das Arretierelement (108) derart auf, dass es zumindest einen ersten, sich zumindest abschnittsweise um einen ersten Winkel (α) von weniger als 90° zu einer Kopfdruckebene (KE), die rechtwinklig zur Rotationsachse (RA) ausgerichtet ist, angewinkelt er-streckenden Kopfdruckflächenabschnitt (106.1) der Kopfdruckfläche (106) ausbildet.

## Beschreibung

Die Erfindung betrifft ein Befestigungselement für eine Palettenvorrichtung. Das Befestigungselement ist aus Kunststoff ausgebildet. Das Befestigungselement ist zur Befestigung eines Unterteils an einem Oberteil mittels einer Rotation um eine Rotationsachse zumindest relativ zum Oberteil ausgebildet. Das Befestigungselement weist einen Einführabschnitt, einen Kopfabschnitt und ein Arretierelement auf. Der Einführabschnitt ist in eine Aufnahmerichtung in eine Unterteilbefestigungsausnehmung des Unterteils einzuführen. Der Einführabschnitt umfasst einen Grundkörper und eine Rotationseingriffseinrichtung. Die Rotationseingriffseinrichtung weist zumindest ein derartig radial vom Grundkörper abstehendes Rotationseingriffselement auf, dass es durch eine Rotation des Befestigungselementes mit einem Oberteilrotationseingriffselement des Oberteils in Eingriff zu bringen ist. Entgegen der Aufnahmerichtung schließt an den Einführabschnitt der Kopfabschnitt an. Der Kopfabschnitt erstreckt sich weiter radial von der Rotationsachse weg als der Einführabschnitt. Der Kopfabschnitt bildet eine dem Oberteil zuzuwendende Kopfdruckfläche aus, die zum Anliegen an einer vom Oberteil abgewandten und die Unterteilbefestigungsausnehmung umgebenden Druckaufnahmefläche des Unterteils ausgebildet ist. Das Arretierelement ist zur Arretierung des Befestigungselementes an dem Unterteil ausgebildet.

Ein derartiges Befestigungselement ist aus dem Stand der Technik bekannt. Es dient zur Ausbildung der Palettenvorrichtung aus dem Unterteil und dem Oberteil. Zur Montage der Palettenvorrichtung wird das Befestigungselement in eine Einschraubrichtung um die Rotationsachse in eine Montageposition rotiert, bis das Unterteil belastbar am Oberteil fixiert ist.

Im Einsatz wird die Palettenvorrichtung mit unterschiedlichem Ladegut beladen und von unterschiedlichen Fahrzeugen fortbewegt. Dabei werden Vibrationen in die Palettenvorrichtung eingeleitet, die häufig zu einer unbeabsichtigen Rotation des Befestigungselementes entgegen der Einschraubrichtung und damit zu einem Lösen des Unterteils zum Oberteil führen können. Um eine derartige Rotation des Befestigungselementes entgegen der Einschraubrichtung zu verhindern, weist das bekannte Befestigungselement als Arretierelemente sich axial über den Einführabschnitt erstreckende Stege auf, die jede Rotation des Befestigungselementes innerhalb der Unterteilbefestigungsausnehmung kraftschlüssig erschweren.

Nachteilig sind diese Arretierelemente, weil sie die Rotation derart weitgehend erschweren, dass sie bei der Montage bereits dann schwer möglich ist, wenn das Befestigungselement relativ zum Oberteil noch längst nicht seine Montageposition erreicht hat. Die weitgehende Erschwerung der Rotation führt auch dazu, dass der Monteur nur schwer merkt, wenn die Montageposition erreicht ist, wodurch es häufig dazu kommt, dass der Monteur versucht, das Befestigungselement über die Montageposition hinaus zu rotieren. Dabei kann es zu einer Zerstörung des Befestigungselementes, insbesondere der Rotationseingriffseinrichtung, kommen.

Aufgabe der vorliegenden Erfindung ist die Bereitstellung eines Befestigungselementes, das derart ausgebildet ist, dass es zuverlässig am Unterteil zu Arretieren ist und mit geringem Aufwand zuverlässig in die Montageposition zu bringen ist. Weiterhin ist Aufgabe der Erfindung die Bereitstellung einer Palettenvorrichtung mit dem Befestigungselement.

Erfindungsgemäß wird die Aufgabe dadurch gelöst, dass der Kopfabschnitt das Arretierelement derart aufweist, dass es zumindest einen ersten Kopfdruckflächenabschnitt der Kopfdruckfläche ausbildet. Der erste Kopfdruckflächenabschnitt erstreckt sich zumindest abschnittsweise um einen ersten Winkel von weniger als 90° zu einer Kopfdruckebene angewinkelt, die rechtwinklig zur Rotationsachse ausgerichtet ist. Der erste Kopfdruckflächenabschnitt des Arretierelementes ist insbesondere derart ausgebildet, dass er in der Montageposition zumindest anteilig dem Oberteil zugewandt ist und/oder an der Druckaufnahmefläche des Unterteils anliegt. Bevorzugt ist die Hauptwirk- bzw. Hauptkontaktrichtung des Arretierelementes des erfindungsgemäßen Befestigungselementes im Gegensatz zum Befestigungselement gemäß dem Stand der Technik axial und nicht radial ausgerichtet. Durch die erfindungsgemäße Ausbildung des Befestigungselementes ist eine formschlüssige Arretierung des Befestigungselementes am Unterteil zu erreichen, die allenfalls kurz vor Erreichen der Montageposition einen Einfluss auf die Rotation des Befestigungselementes um die Rotationsachse hat.

Das Befestigungselement ist insbesondere aus einem Kunststoff ausgebildet. Das Befestigungselement ist insbesondere einstückig ausgebildet. Das Befestigungselement erstreckt sich bevorzugt länglich in die Aufnahmerichtung. Der Einführabschnitt ist im Vergleich zum Kopfabschnitt bevorzugt schlanker und in die Aufnahmerichtung länger ausgebildet. Zumindest der Grundkörper und/oder der Kopfabschnitt erstrecken/erstreckt sich insbesondere zumindest im Wesentlichen rotationssymmetrisch.

Das Rotationseingriffselement steht zumindest lokal radial vom Grundkörper ab. Im montierten Zustand des Befestigungselementes ist das Rotationseingriffselement derart angeordnet, dass das Oberteilrotationseingriffselement bezogen auf die Aufnahmerichtung zwischen dem Rotationseingriffselement und dem Kopfabschnitt angeordnet ist. Ein Lösen des Befestigungselementes vom Oberteil erfordert eine zumindest anteilig rotatorische Bewegung des Befestigungselementes relativ zum Oberteil entgegen der Einschraubrichtung.

Die Rotationsachse erstreckt sich insbesondere parallel zur Aufnahmerichtung und/oder rechtwinklig zu einer Aufstandsebene. Idealisiert liegt eine Bodenfläche in der Aufstandsebene, auf der die Palettenvorrichtung im Einsatz aufsteht.

Der Kopfabschnitt ist insbesondere zumindest im Wesentlichen wie ein Schraubenkopf ausgebildet. Die Kopfdruckfläche erstreckt sich insbesondere in einer axialen Ansicht bevorzugt zumindest im Wesentlichen kreisringförmig. Zumindest aufgrund des ersten Kopfdruckflächenabschnittes erstreckt sich die Kopfdruckfläche zumindest nicht vollständig in der Kopfdruckebene. Vorzugsweise erstreckt sich jedoch ein Teil der Kopfdruckfläche in der Kopfdruckebene. Die Kopfdruckebene berührt oder schneidet bevorzugt den Kopfdruckflächenabschnitt. Die angewinkelte Erstreckung des ersten Kopfdruckflächenabschnittes relativ zur Kopfdruckebene kann jedoch auch bedeuten, dass der erste Kopfdruckflächenabschnitt von der Kopfdruckebene beabstandet, jedoch nicht parallel dazu, ausgebildet ist.

Der erste Kopfdruckflächenabschnitt erstreckt sich insbesondere vollständig um den ersten Winkel angewinkelt zur Kopfdruckebene. Der erste Kopfdruckflächenabschnitt ist zumindest abschnittsweise oder vollständig derart ausgebildet, dass er eben in einer zur Kopfdruckebene angewinkelten Ebene liegt oder sich derart erstreckt, dass er durch Linien ausgebildet ist, die sich jeweils gerade und radial zur Rotationsachse erstrecken. Insbesondere erstreckt sich der erste Kopfdruckflächenabschnitt in einem Längsschnitt, wobei in einer Längsschnittebene die Rotationsachse liegt, parallel zur Kopfdruckebene.

Der erste Winkel beträgt vorzugsweise höchstens 45°, bevorzugt höchstens 30°, besonders bevorzugt höchstens 22,5°. Aus dieser Einschränkung des ersten Winkels ergibt sich ein besonders praktikabler Kompromiss zwischen einer zuverlässigen Arretierung des Befestigungselementes in der Montageposition und einer Vermeidung einer unnötigen Erschwerung der Rotation des Befestigungselementes zur Erreichung der Montageposition.

Das Arretierelement bildet vorzugsweise einen zweiten Kopfdruckflächenabschnitt der Kopfdruckfläche aus, der sich zumindest abschnittsweise, insbesondere vollständig, um einen zweiten Winkel von weniger als 90° zur Kopfdruckebene angewinkelt erstreckt. Der erste Kopfdruckflächenabschnitt ist bevorzugt zumindest anteilig in eine erste tangentiale Richtung gewandt. Der zweite Kopfdruckflächenabschnitt ist besonders bevorzugt zumindest anteilig in eine zweite tangentiale Richtung gewandt, die der ersten tangentialen Richtung entgegengesetzt ist. Insbesondere ist das Arretierelement derart ausgebildet, dass es vom Rest des Kopfabschnittes derart in die Aufnahmerichtung absteht, dass die genannten Kopfdruckflächenabschnitte anteilig axial stumpf oder spitz aufeinander zu verlaufen. Dass die Kopfdruckflächen wie beschrieben in die erste bzw. zweite tangentiale Richtung gewandt sind, bedeutet, dass eine Orthogonale zum jeweiligen Kopfdruckflächenabschnitt einen tangentialen Anteil in die jeweilige tangentiale Richtung hat. Insbesondere ist einer der Kopfdruckflächenabschnitte im Gegensatz zum anderen zumindest anteilig in die Einschraubrichtung gewandt. Durch die vorbeschriebene Ausbildung des Arretierelementes ist es das Befestigungselement zuverlässig in die Montageposition zu bringen und aus der Montageposition zu lösen, ohne dass darunter die Zuverlässigkeit der Arretierung leidet.

Der erste Kopfdruckflächenabschnitt und der zweite Kopfdruckflächenabschnitt grenzen insbesondere entlang einer Geraden aneinander an. Die Gerade schneidet insbesondere die Rotationsachse und ist besonders bevorzugt rechtwinklig zur Rotationsachse ausgebildet. Mit dem Bereich, in dem die genannten Kopfdruckflächenabschnitte aneinander angrenzen, erstreckt sich der Kopfabschnitt bevorzugt am weitesten in die Aufnahmerichtung. Der erste Kopfdruckflächenabschnitt ist bevorzugt dem zweiten Kopfdruckflächenabschnitt bezogen auf die erste tangentiale Richtung vorgeordnet. Vorzugsweise ist der erste Winkel kleiner als der zweite Winkel. Dadurch ist der zweite, in die erste tangentiale Richtung bzw. die Einschraubrichtung bevorzugt nachgeordnete, Kopfdruckflächenabschnitt bevorzugt steiler zur Kopfdruckebene ausgerichtet als der erste Kopfdruckflächenabschnitt und kann bei Anliegen an einer Arretiergegenfläche des Unterteils besonders wirksam eine unbeabsichtigte Rotation des Befestigungselementes aus der Montageposition vermeiden. Der insbesondere flachere erste Kopfdruckflächenabschnitt erleichtert dem Gegenüber insbesondere die Erreichung der Montageposition.

Das Befestigungselement weist bevorzugt eine Werkzeugausnehmung auf. Die Werkzeugausnehmung erstreckt sich in die Aufnahmerichtung insbesondere durch den Kopfabschnitt, besonders bevorzugt durch das gesamte Befestigungselement durchgehend. Die Werkzeugausnehmung bildet insbesondere eine Werkzeugaufnahme, wie zum Beispiel eine Innen- oder Außensechskant- oder Mehrkantaufnahme aus. Dadurch ist erreicht, dass die Werkzeugaufnahme sowohl zur Montage des Befestigungselementes als auch nach einem Bruch des Befestigungselementes zur Demontage eines im Oberteil verbliebenen Restes des Befestigungselementes mit einem Werkzeug verwendbar ist.

Das Rotationseingriffselement ist bevorzugt als Gewindewendel ausgebildet, die sich zumindest abschnittsweise spiralförmig um die Rotationsachse erstreckt. Dadurch wird bevorzugt ein Außengewinde des Befestigungselementes ausgebildet. Das Außengewinde ist ein- oder mehrgängig ausgebildet. Die Rotationseingriffseinrichtung ist insbesondere mit dem Außengewinde gleichzusetzen. Die mit dem Außengewinde festgelegte Einschraubrichtung fällt zumindest in einer Seitenansicht bei einer hypothetischen Vernachlässigung der Gewindesteigung mit der ersten tangentialen Richtung zusammen.

Eine Erstreckung des Arretierelementes in die Aufnahmerichtung ist bevorzugt höchstens so groß wie eine Gewindesteigung des Außengewindes. Das bedeutet insbesondere, dass das Arretierelement die Rotation des Befestigungselementes in die Montageposition höchstens für die letzte Umdrehung des Befestigungselementes erschweren kann, womit bereits ein erheblicher Vorteil gegenüber dem Stand der Technik erreicht ist. Besonders bevorzugt ist die Erstreckung des Arretierelementes in die Aufnahmerichtung höchstens so groß wie eine Hälfte der Gewindesteigung oder ein Viertel der Gewindesteigung. Das Vorstehende gilt zusätzlich oder alternativ für die Erstreckung des ersten und/oder zweiten Kopfdruckflächenabschnittes in die Aufnahmerichtung.

Der Kopfabschnitt weist vorzugsweise zumindest zwei insbesondere gleich ausgebildete Arretierelemente auf. Die Arretierelemente sind bevorzugt über den Umfang des Grundkörpers verteilt, besonders bevorzugt regelmäßig verteilt. In einer besonders bevorzugten Ausgestaltung des Befestigungselementes weist es genau zwei, insbesondere um 180° zueinander versetzt/verschwenkt angeordnete, oder mehr als zwei Arretierelemente auf.

Der Kopfabschnitt bildet bevorzugt zumindest einen dritten Kopfdruckflächenabschnitt der Kopfdruckfläche aus. Der dritte Kopfdruckflächenabschnitt erstreckt sich besonders bevorzugt zumindest an den ersten und/oder zweiten Kopfdruckflächenabschnitt angrenzend. Der dritte Kopfdruckflächenabschnitt erstreckt sich vorzugsweise zumindest abschnittsweise, insbesondere vollständig, eben in der Kopfdruckebene. Der dritte Kopfdruckflächenabschnitt grenzt besonders bevorzugt an zwei unterschiedliche Arretierelemente an.

Ein Abstand einer von der Rotationsachse abgewandten Seite des Arretierelementes von der Rotationsachse gleicht bevorzugt einem Außenradius der Kopfdruckfläche und/oder des Kopfabschnittes. Ein Abstand einer der Rotationsachse zugewandten Seite des Arretierelementes von der Rotationsachse gleicht bevorzugt einem Innenradius der Kopfdruckfläche. Die radiale Erstreckung des ersten/zweiten Kopfdruckflächenabschnittes gleicht bevorzugt der radialen Erstreckung der genannten Kopfdruckfläche. Eine Erstreckung des Arretierelementes in die Umfangsrichtung ist vorzugsweise kleiner als 90°, bevorzugt kleiner als 45°, besonders bevorzugt kleiner als 22,5°. Die Erstreckung des Arretierelementes in die Umfangsrichtung gleicht insbesondere der kumulierten Erstreckung des ersten Kopfdruckflächenabschnittes und des zweiten Kopfdruckflächenabschnittes in die Umfangsrichtung.

Die Aufgabe wird weiterhin gelöst durch eine Palettenvorrichtung. Die Palettenvorrichtung ist insbesondere als Palettenbox oder als Palette ausgebildet. Die Palettenvorrichtung ist bevorzugt zumindest überwiegend, insbesondere ausschließlich, aus Kunststoff ausgebildet. Die Palettenvorrichtung grenzt an die Aufstandsebene an.

Die Palettenvorrichtung weist das Oberteil und das Unterteil auf. Das Oberteil umfasst einen Ladeboden, der zur Begrenzung eines Laderaumes zur Aufstandsebene hin eine Laderaumbodenfläche ausbildet. Der Ladeboden ist zwischen dem Laderaum und der Aufstandsebene angeordnet. Der Laderaum ist ein gedachter Raum, in dem auf den Ladeboden aufgelegtes Ladegut angeordnet ist. Der Laderaum ist optional, jedoch nicht notwendigerweise, in andere Richtungen als in Richtung der Aufstandsebene gegenständlich begrenzt. Zwischen der Laderaumbodenfläche und der Aufstandsebene bildet der Ladeboden eine Stützelementaufnahmeeinrichtung aus, die eine der Aufstandsebene zugewandte Aufnahmegrundfläche ausbildet.

Das Unterteil ist mittels des vorbeschriebenen Befestigungselementes am Oberteil befestigt. Das Unterteil ist zumindest lokal zwischen dem Oberteil und der Aufstandsebene angeordnet und liegt an der Aufnahmegrundfläche an. Die Stützelementaufnahmeeinrichtung ist zur Aufnahme des Unterteils durch das Oberteil ausgebildet. Das Unterteil weist zumindest ein Stützelement auf. Das Stützelement wird durch das Befestigungselement am Oberteil, insbesondere an der Stützelementaufnahmeeinrichtung, befestigt, bevorzugt verschraubt. Das Stützelement wird durch das Befestigungselement insbesondere in die Aufnahmerichtung gegen das Oberteil gedrückt.

Das Unterteil, insbesondere das Stützelement, weist insbesondere die Unterteilbefestigungsausnehmung auf, die in die Aufnahmerichtung durchgängig ausgebildet ist. Das Oberteil weist insbesondere eine Oberteilbefestigungsausnehmung auf, die sich in die Aufnahmerichtung als Sackloch in den Ladeboden erstreckt. Das Befestigungselement erstreckt sich durch die Unterteilbefestigungsausnehmung in die Oberteilbefestigungsausnehmung. Die Oberteilbefestigungsausnehmung weist insbesondere das Oberteilrotationseingriffselement auf, das insbesondere ein Innengewinde ausbildet.

Insbesondere im Falle der Ausbildung der Palettenvorrichtung als Palettenbox weist das Oberteil bevorzugt mehrere Laderaumseitenwände auf. Die Laderaumseitenwände sind besonders bevorzugt schwenkbeweglich relativ zum Ladeboden angeordnet. Die Laderaumseitenwände dienen zur seitlichen Umgrenzung des Laderaumes und erstrecken sich hierzu angewinkelt zur Aufstandsebene flächig. Die angewinkelte Erstreckung ist derart zu verstehen, dass eine Ebene, innerhalb derer sich eine jeweilige Laderaumseitenwand hauptsächlich erstreckt, angewinkelt zur Aufstandsebene angeordnet ist, ohne dass die Laderaumseitenwände von der Aufstandsebene geschnitten werden.

Die Stützelementaufnahmeeinrichtung weist vorzugsweise zumindest eine, insbesondere zumindest zwei Aufnahmeseitenwandungen zur seitlichen Begrenzung einer Stützelementaufnahme auf, innerhalb derer das Stützelement zumindest teilweise angeordnet ist. Die Stützelementaufnahme ist insbesondere eine U-förmige und zur Aufstandsebene hin offene Ausnehmung, in die das Stützelement in die Aufnahmerichtung einzuführen ist. Bevorzugt weist das Unterteil der Palettenvorrichtung zumindest zwei, insbesondere zumindest drei Stützelemente auf. Das Unterteil umfasst bevorzugt ein Kufenelement, das die Stützelemente oder zumindest einen Teil der Stützelemente vom Oberteil beabstandet miteinander verbindet und an die Aufstandsebene angrenzt. Besonders bevorzugt weist das Unterteil insgesamt neun Stützelemente auf, die in drei Gruppen von je drei Stützelementen unterteilt sind, wobei jeder Gruppe ein Kufenelement zugeordnet ist.

Das Befestigungselement der Palettenvorrichtung ist insbesondere durch eine Rotation relativ zum Oberteil und zum Unterteil in die Einschraubrichtung um die Rotationsachse in die Montageposition eingeschraubt. In der Montageposition ist das Befestigungselement durch das Arretierelement am Unterteil arretiert. Die Unterteilbefestigungsausnehmung und die Druckaufnahmefläche werden insbesondere vom Stützelement ausgebildet. Die Druckaufnahmefläche bildet bevorzugt zumindest eine sich in die Aufnahmerichtung erstreckende Arretierausnehmung aus, in der das Arretierelement in der Montageposition zur Arretierung angeordnet ist. Die Arretierausnehmung ist vorzugsweise durch zumindest einen Druckaufnahmeflächenabschnitt ausgebildet, der sich komplementär zum zumindest einen Kopfdruckflächenabschnitt erstreckt. Bevorzugt ist die Arretierausnehmung durch zumindest zwei Druckaufnahmeflächenabschnitte ausgebildet, die sich komplementär zu den beiden Kopfdruckflächenabschnitte erstrecken.

Alternativ zur vorbeschriebenen Ausbildung des Befestigungselementes und des Unterteils kann das zumindest eine Arretierelement auch umgekehrt vom Unterteil umfasst sein und die Arretierausnehmung umgekehrt vom Befestigungselement, insbesondere von dessen Kopfabschnitt, ausgebildet sein. Gleiches gilt für die vor- und nachbeschriebenen Details, die in Bezug auf das Arretierelement und/oder die Arretierausnehmung beschrieben sind.

Das Unterteil weist bevorzugt eine Mehrzahl von Arretierausnehmungen auf. Insbesondere weist die Palettenvorrichtung mehr Arretierausnehmungen als Arretierelemente auf. Alternativ weist die Palettenvorrichtung bevorzugt mehr Arretierelemente als Arretierausnehmungen auf. Die mehreren Arretierausnehmungen sind besonders bevorzugt in die Umfangsrichtung insbesondere unmittelbar aneinander angrenzend ausgebildet.

Die Rotationseingriffseinrichtung weist bevorzugt einen Schraubanschlag auf. Der Schraubanschlag dient zur Begrenzung eines Einschraubens des Befestigungselementes in die Oberteilbefestigungsausnehmung in der Montageposition. Der Schraubanschlag schließt sich insbesondere an ein dem Kopfabschnitt zugewandtes Ende des Rotationseingriffselementes an. Der Schraubanschlag und insbesondere ein Ende des Innengewindes wirken besonders bevorzugt derart zusammen, dass sie zumindest anteilig tangential aneinander anstoßen, wenn das Arretierelement vollständig in die Arretierausnehmung eintaucht. Dadurch ist eine optimale Positionierung des Befestigungselementes in der Montageposition vereinfacht.

Weitere Einzelheiten und Vorteile der Erfindung sind den nachfolgend beschriebenen, schematisch dargestellten Ausführungsbeispielen zu entnehmen; es zeigen:
Fig. 1 eine erfindungsgemäße Palettenvorrichtung in einer perspektivischen Ansicht,
Fig. 2 ein erfindungsgemäßes Befestigungselement in einer perspektivischen Ansicht,
Fig. 3 eine Detaildarstellung eines Arretierelementes des Befestigungselementes gemäß Fig. 2,
Fig. 4 eine Schnittdarstellung eines Bereichs um ein Stützelement der Palettenvorrichtung gemäß Fig. 1,
Fig. 5 einen Teil des Bereichs gemäß Fig. 4 in einer weiteren perspektivischen Ansicht.

Die nachfolgend beschriebenen Merkmale der erfindungsgemäßen Ausführungsbeispiele können auch in anderen Kombinationen als dargestellt zu erfindungsgemäßen Weiterbildungen führen. Soweit sinnvoll sind gleiche oder gleich wirkende Komponenten der Ausführungsbeispiele mit identischen Bezugsziffern versehen.

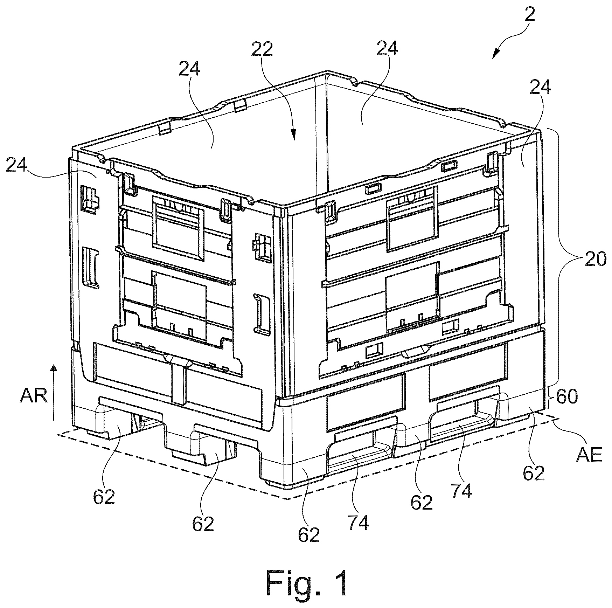

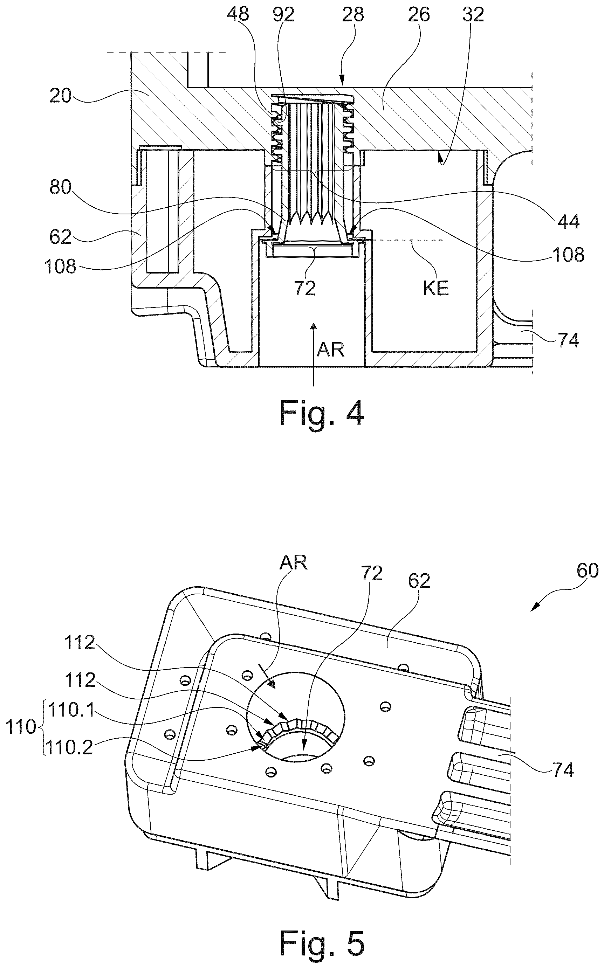

Die Palettenvorrichtung 2 gemäß Fig. 1 steht auf einer Aufstandsebene AE auf. Die Palettenvorrichtung 2 weist ein Oberteil 20 und ein Unterteil 60 auf, das zwischen dem Oberteil 20 und der Aufstandsebene AE angeordnet ist. Das Oberteil 20 bildet einen von der Aufstandsebene AE weggerichtet offenen Laderaum 22 aus. Der Laderaum 22 ist zur Aufstandsebene AE hin durch eine in Fig. 1 nicht dargestellte Laderaumbodenfläche 28 eines Ladebodens 26 des Oberteils 20 begrenzt (sh. Fig. 4). Seitlich ist der Laderaum 22 durch vier Laderaumseitenwände 24 begrenzt, die sich jeweils rechtwinklig zur Aufstandsebene AE flächig erstrecken.

Das Unterteil 60 weist neun Stützelemente 62 auf, von denen in Fig. 1 aufgrund der Perspektive fünf sichtbar sind. Zwei äußere Stützelementgruppen, die je drei Stützelemente 62 umfassen, weisen zusätzlich die Stützelemente 62 verbindende Kufenelemente 74 auf, die sich vom Oberteil 20 beabstandet erstrecken und an die Aufstandsebene AE angrenzen. Die Stützelemente 62 liegen an einer der Laderaumbodenfläche 28 gegenüberliegenden Aufnahmegrundfläche 32 des Oberteils an (sh. Fig. 4). Zur nachfolgend im Detail erläuterten Befestigung des Unterteils 60 am Oberteil 20 sind die Stützelemente 62 in einer Aufnahmerichtung AR an das Oberteil 20 herangeführt.

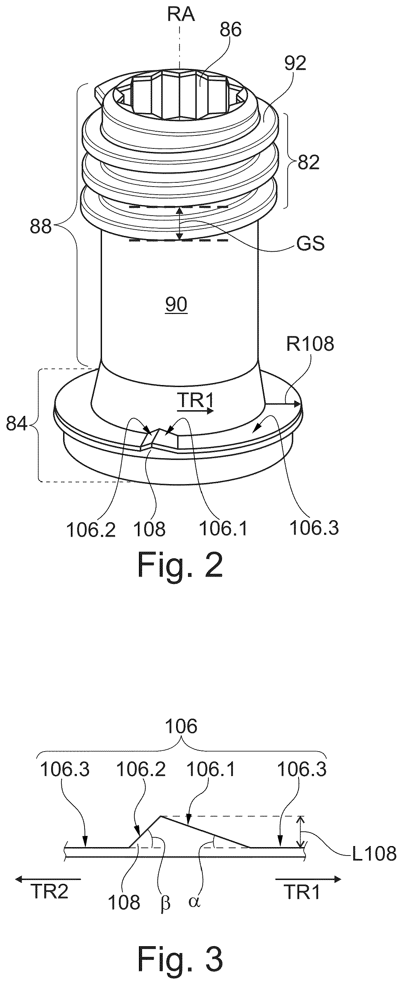

Die Befestigung des Unterteils 60 am Oberteil 20 erfolgt durch Befestigungselemente 80, wovon eines durch die Fig. 2 im Detail dargestellt ist. Das Befestigungselement 80 erstreckt sich länglich in Richtung einer Rotationsachse RA. Das Befestigungselement 80 setzt sich zusammen aus einem Einführabschnitt 88 und einem Kopfabschnitt 84, der sich von der Rotationsachse RA weiter radial weg erstreckt als der Einführabschnitt 88. Im montierten Zustand (sh. Fig. 4) ist der Einführabschnitt 88 in die Aufnahmerichtung AR in/durch eine Unterteilbefestigungsausnehmung 72 in einem Stützelement 62 des Unterteils 60 eingeführt. Eine vom Kopfabschnitt 84 ausgebildete Kopfdruckfläche 106 liegt an einer vom Oberteil 20 abgewandten Druckaufnahmefläche 110 des Stützelementes 62 an, die die Unterteilbefestigungsausnehmung 72 umgibt.

Der Einführabschnitt 88 ist aus einem Grundkörper 90 und einer Rotationseingriffseinrichtung ausgebildet. Die Rotationseingriffseinrichtung ist durch ein radial vom Grundkörper 90 abstehendes Rotationseingriffselement 92 ausgebildet. Das Rotationseingriffselement 92 erstreckt sich spiralförmig um die Rotationsachse RA als Gewindewendel und bildet ein Außengewinde 82 aus. Mit dem Außengewinde 82 ist das Befestigungselement 80 in eine Oberteilbefestigungsausnehmung 44 mit einem ein Innengewinde ausbildenden und sich spiralförmig erstrecken Oberteilrotationseingriffselement 48 eingeschraubt. Zum Einschrauben dient eine als Innenprofilierung ausgebildete Werkzeugaufnahme 86.

Das Befestigungselement 80 weist zwei Arretierelemente 108 auf. Die Arretierelemente 108 sind derart vom Kopfabschnitt 84 ausgebildet, dass sie jeweils einen ersten Kopfdruckflächenabschnitt 106.1 und einen zweiten Kopfdruckflächenabschnitt 106.2 der Kopfdruckfläche 106 ausbilden. Der erste Kopfdruckflächenabschnitt 106.1 ist um einen ersten Winkel α von weniger als 30° zu einer Kopfdruckebene KE angewinkelt, die sich rechtwinklig zur Rotationsachse RA erstreckt. Der zweite Kopfdruckflächenabschnitt 106.2 ist entgegengesetzt um einen zweiten Winkel β von weniger als 45° zur Kopfdruckebene KE angewinkelt.

Zwischen den Arretierelementen 108 erstreckt sich ein dritter Kopfdruckflächenabschnitt 106.3 der Kopfdruckfläche 106, der in der Kopfdruckebene KE liegt. Der erste Winkel α ist kleiner als der zweite Winkel β. Der erste Kopfdruckflächenabschnitt 106.1 ist anteilig in eine erste tangentiale Richtung TR1 gewandt und dem zweiten Kopfdruckflächenabschnitt 106.2, der in eine zweite, der ersten tangentialen Richtung TR1 entgegengesetzte tangentiale Richtung TR2 gewandt ist, bezogen auf die erste tangentiale Richtung TR1 vorgeordnet. Eine Erstreckung L108 des Arretierelementes 108 in die Aufnahmerichtung AR ist kleiner als eine Gewindesteigung GS des Außengewindes 82. Ein Abstand R108 einer von der Rotationsachse RA abgewandten Seite des Arretierungselementes 108 von der Rotationsachse RA gleicht einem Außenradius des Kopfabschnittes 84. Das Vorstehende geht insbesondere aus den Fig. 2 und 3 hervor.

Das in Fig. 5 perspektivisch von unten dargestellte Stützelement 62 weist eine der Aufstandsebene AE zugewandte Druckaufnahmefläche 110 auf. Die Druckaufnahmefläche 110 bildet mehrere sich in die Umfangsrichtung um die Rotationsachse RA unmittelbar aneinander anschließende Arretierausnehmungen 112 aus. In der Montageposition des Befestigungselementes 80 sind die beiden Arretierelemente 108 jeweils in einer der Arretierausnehmungen 112 angeordnet. Jede Arretierausnehmung 112 ist durch einen ersten Druckaufnahmeflächenabschnitt 110.1 und einen zweiten Druckaufnahmeflächenabschnitt 110.2 ausgebildet, die sich komplementär zu dem ersten und dem zweiten Kopfdruckflächenabschnitt 106.1, 106.2 erstrecken.

### Bezugszeichenliste

- 2: Palettenvorrichtung
- 20: Oberteil
- 22: Laderaum
- 24: Laderaumseitenwand
- 26: Ladeboden
- 28: Laderaumbodenfläche
- 32: Aufnahmegrundfläche
- 44: Oberteilbefestigungsausnehmung
- 48: Oberteilrotationseingriffselement
- 60: Unterteil
- 62: Stützelement
- 72: Unterteilbefestigungsausnehmung
- 74: Kufenelement
- 80: Befestigungselement
- 82: Außengewinde
- 84: Kopfabschnitt
- 86: Werkzeugaufnahme
- 88: Einführabschnitt
- 90: Grundkörper
- 92: Rotationseingriffselement
- 106: Kopfdruckfläche
- 106.1, 106.2, 106.3: Kopfdruckflächenabschnitte
- 108: Arretierelement
- 110: Druckaufnahmefläche
- 110.1, 110.2: Druckaufnahmeflächenabschnitte
- 112: Arretierausnehmung
- α: erster Winkel
- β: zweiter Winkel
- AE: Aufstandsebene
- AR: Aufnahmerichtung
- GS: Gewindesteigung
- KE: Kopfdruckebene
- L108: Erstreckung des Arretierelementes
- R108: Außenradius des Kopfabschnittes
- RA: Rotationsachse
- TR1, TR2: tangentiale Richtungen

## Patentansprüche

1. Befestigungselement (80) für eine Palettenvorrichtung (2), das aus Kunststoff ausgebildet ist und zur Befestigung eines Unterteils (60) an einem Oberteil (20) mittels einer Rotation um eine Rotationsachse (RA) zumindest relativ zum Oberteil (20) ausgebildet ist und
- einen in eine Aufnahmerichtung (AR) in eine Unterteilbefestigungsausnehmung (72) des Unterteils (60) einzuführenden Einführabschnitt (88), der einen Grundkörper (90) und eine Rotationseingriffseinrichtung umfasst, die zumindest ein derartig radial vom Grundkörper (90) abstehendes Rotationseingriffselement (92) aufweist, dass es durch eine Rotation des Befestigungselementes (80) mit einem Oberteilrotationseingriffselement (48) des Oberteils (20) in Eingriff zu bringen ist,
- einen entgegen der Aufnahmerichtung (AR) an den Einführabschnitt (88) anschließenden Kopfabschnitt (84), der sich weiter radial von der Rotationsachse (RA) wegerstreckt als der Einführabschnitt (88) und eine dem Oberteil (20) zuzuwendende Kopfdruckfläche (106) ausbildet, die zum Anliegen an einer vom Oberteil (20) abgewandten und die Unterteilbefestigungsausnehmung (72) umgebenden Druckaufnahmefläche (110) des Unterteils (60) ausgebildet ist, und
- ein Arretierelement (108) zur Arretierung des Befestigungselementes (80) an dem Unterteil (60)
aufweist,
**dadurch gekennzeichnet, dass** der Kopfabschnitt (84) das Arretierelement (108) derart aufweist, dass es zumindest einen ersten, sich zumindest abschnittsweise um einen ersten Winkel (α) von weniger als 90° zu einer Kopfdruckebene (KE), die rechtwinklig zur Rotationsachse (RA) ausgerichtet ist, angewinkelt erstreckenden Kopfdruckflächenabschnitt (106.1) der Kopfdruckfläche (106) ausbildet.

2. Befestigungselement nach Anspruch 1,
**dadurch gekennzeichnet, dass** der erste Winkel (α) höchstens 45°, bevorzugt höchstens 30°, besonders bevorzugt höchstens 22,5° beträgt.

3. Befestigungselement nach Anspruch 1 oder 2,
**dadurch gekennzeichnet, dass** das Arretierelement (108) einen zweiten, sich zumindest abschnittsweise um einen zweiten Winkel (β) von weniger als 90° zur Kopfdruckebene (KE) angewinkelt erstreckenden Kopfdruckflächenabschnitt (106.2) der Kopfdruckfläche (106) ausbildet, wobei der erste Kopfdruckflächenabschnitt (106.1) zumindest anteilig in eine erste tangentiale Richtung (TR1) und der zweite Kopfdruckflächenabschnitt (106.2) zumindest anteilig in eine zweite, der ersten tangentialen Richtung (TR1) entgegengesetzte tangentiale Richtung (TR2) gewandt ist.

4. Befestigungselement nach Anspruch 3,
**dadurch gekennzeichnet, dass** der erste Winkel (α) kleiner ist als der zweite Winkel (β).

5. Befestigungselement nach Anspruch 3 oder 4,
**dadurch gekennzeichnet, dass** der erste Kopfdruckflächenabschnitt (106.1) dem zweiten Kopfdruckflächenabschnitt (106.2) bezogen auf die erste tangentiale Richtung (TR1) vorgeordnet ist.

6. Befestigungselement nach einem der vorhergehenden Ansprüche,
**dadurch gekennzeichnet, dass** das Rotationseingriffselement (92) als sich zumindest abschnittsweise spiralförmig um die Rotationsachse (RA) erstreckende Gewindewendel zur Ausbildung eines Außengewindes (82) ausgebildet ist.

7. Befestigungselement nach Anspruch 6,
**dadurch gekennzeichnet, dass** eine Erstreckung (L108) des Arretierelementes (108) in die Aufnahmerichtung (AR) höchstens so groß ist wie eine Gewindesteigung (GS) des Außengewindes (82), bevorzugt höchstens so groß ist wie eine Hälfte der Gewindesteigung (GS), besonders bevorzugt höchstens so groß ist wie ein Viertel der Gewindesteigung (GS).

8. Befestigungselement nach einem der vorhergehenden Ansprüche,
**dadurch gekennzeichnet, dass** der Kopfabschnitt (84) zumindest zwei insbesondere gleich ausgebildete Arretierelemente (108) umfasst.

9. Palettenvorrichtung (2), die zumindest überwiegend aus Kunststoff ausgebildet ist und an eine Aufstandsebene (AE) angrenzt, aufweisend
- ein Oberteil (20) mit einem Ladeboden (26), der der zur Begrenzung eines Laderaumes (22) zur Aufstandsebene (AE) hin eine Laderaumbodenfläche (28) und zwischen der Laderaumbodenfläche (28) und der Aufstandsebene (AE) eine Stützelementaufnahmeeinrichtung ausbildet, die eine der Aufstandsebene (AE) zugewandte Aufnahmegrundfläche (32) ausbildet, und
- zumindest ein mittels zumindest eines Befestigungselementes (80) in einer Montageposition am Oberteil (20) befestigtes Unterteil (60), das an die Aufstandsebene (AE) und an die Aufnahmegrundfläche (32) angrenzt und zumindest ein Stützelement (62) aufweist,
**gekennzeichnet durch** ein Befestigungselement (80) nach einem der vorhergehenden Ansprüche.

10. Palettenvorrichtung nach Anspruch 9,
**dadurch gekennzeichnet, dass** die Palettenvorrichtung (2) als Palettenbox ausgebildet ist und das Oberteil (20) mehrere Laderaumseitenwände (24) aufweist, die sich zur seitlichen Umgrenzung des Laderaumes (22) angewinkelt zur Aufstandsebene (AE) flächig erstrecken.

11. Palettenvorrichtung nach Anspruch 9 oder 10,
**dadurch gekennzeichnet, dass** die Druckaufnahmefläche (110) zumindest eine sich in die Aufnahmerichtung (AR) erstreckende Arretierausnehmung (112) ausbildet, in der das Arretierelement (108) in der Montageposition angeordnet ist.

12. Palettenvorrichtung nach einem der Ansprüche 9 bis 11,
**dadurch gekennzeichnet, dass** die Arretierausnehmung (112) durch zumindest einen Druckaufnahmeflächenabschnitt (110.1, 110.2) ausgebildet ist, der sich komplementär zum zumindest einen Kopfdruckflächenabschnitt (106.1, 106.2) erstreckt.

13. Palettenvorrichtung nach Anspruch 11 oder 12,
**dadurch gekennzeichnet, dass** die Druckaufnahmefläche (110) mehrere Arretierausnehmungen (112) ausbildet, die insbesondere aneinander angrenzend ausgebildet sind.

14. Palettenvorrichtung nach einem der Ansprüche 9 bis 13,
**dadurch gekennzeichnet, dass** die Rotationseingriffeinrichtung einen Schraubanschlag aufweist, der sich insbesondere an ein dem Kopfabschnitt (84) zugewandtes Ende des Rotationseingriffselementes (92) anschließt und zur Begrenzung eines Einschraubens des Befestigungselementes (80) in die Oberteilbefestigungsausnehmung (44) in der Montageposition ausgebildet ist.

15. Palettenvorrichtung nach einem der Ansprüche 9 bis 14,
**dadurch gekennzeichnet, dass** das Unterteil (60) zumindest zwei, insbesondere zumindest drei, Stützelemente (62) und zumindest ein Kufenelement (74) aufweist, dass die Stützelemente (62) vom Oberteil (20) beabstandet miteinander verbindet und an die Aufstandsebene (AE) angrenzt.
